# EUROPÄISCHE PATENTSCHRIFT

(11) **EP 1 169 907 B1**
(45) Veröffentlichungstag und Bekanntmachung des Hinweises auf die Patenterteilung: **24.10.2007**
(21) Anmeldenummer: 01114409.4
(22) Anmeldetag: 15.06.2001
(51) Int. Cl.: A01D 69/00, A01F 29/10

(54) **Reversiervorrichtung für Landwirtschaftliche Erntemaschine**
Reversing device for agricultural harvesting machine
Dispositif inverseur pour machine agricole de récolte

(30) Priorität: 27.06.2000 DE 10030330
(43) Veröffentlichungstag der Anmeldung: 09.01.2002
(73) Patentinhaber: CLAAS Saulgau GmbH, 88348 Bad Saulgau (DE)
(72) Erfinder: Rauch, Hans, 88348 Bad Saulgau (DE)

(56) Entgegenhaltungen:
- EP-A- 0 139 264
- EP-A- 0 403 899
- EP-A- 0 993 766
- EP-A- 1 046 333
- FR-A- 2 220 176
- FR-A- 2 485 326
- US-A- 5 261 216

## Beschreibung

Die Erfindung betrifft eine landwirtschaftliche Erntemaschine mit wenigstens einer Adaptiereinrichtung zur Aufnahme eines Vorsatzgerätes gemäß dem Oberbegriff des Anspruchs 1.

Eine derartige landwirtschaftliche Erntemaschine wird in der DE 198 47 891 offenbart, wobei die landwirtschaftliche Erntemaschine als Feldhäcksler und das Vorsatzgerät als erntgutaufsammelnde und -fördernde Pick-up ausgeführt ist. Damit durch Fremdkörper verursachte Beschädigungen an den Arbeitsorganen der Erntemaschine weitgehend vermieden werden, ist den das Erntegut vom Vorsatzgerät übernehmenden frontseitigen, als Einzugswalzen ausgeführten Arbeitsorganen eine Reversiereinrichtung zugeordnet, mit deren Hilfe die Drehrichtung der Einzugsorgane umgekehrt werden kann. Bei Betätigung der Reversiereinrichtung fördern die Einzugswalzen das bereits angenommene Erntegut wieder aus diesem vorderen Bereich der Erntemaschine heraus und übergeben es an das im Frontbereich an die Erntemaschine adaptierte Vorsatzgerät. Damit es im Bereich der Arbeitsorgane des Vorsatzgerätes nicht zu Verstopfungen oder zu Beschädigungen aufgrund der im Erntegut befindlichen Fremdkörper kommt, offenbart die DE 198 47 891 eine Steuerung, die sicherstellt, dass stets zuerst das Querförderorgan angehoben wird, bevor die Reversiereinrichtung zuschaltet und das mit Fremdkörpern durchsetzte Erntegut wieder aus der Erntemaschine herausgefördert. Ein wesentlicher Nachteil eines so ablaufenden Reversiervorgangs ist der, dass neben dem Erntegut auch der oder die Fremdkörper wieder in das Vorsatzgerät gefördert werden, sodass zur Vermeidung des nochmaligen Einzugs der Fremdkörper diese aus dem Vorsatzgerät entfernt werden müssen. Dies wird in aller Regel vom Fahrer der Erntemaschine dadurch erledigt, dass er den Erntevorgang unterbricht, die Erntemaschine verläßt und die Fremdkörper von Hand aus dem Vorsatzgerät entfernt. Die dabei auftretenden Standzeiten reduzieren die Produktivität der landwirtschaftlichen Erntemaschine erheblich. Zum Anderen erhöht sich die Verletzungsgefahr der die Fremdkörper entfernenden Person, da sie je nach Lage der Fremkörper zwischen den Arbeitsorganen des Vorsatzgerätes hantieren muss.

Der Erfindung liegt nunmehr die Aufgabe zugrunde, eine landwirtschaftliche Erntemaschine der eingangs beschriebenen Art so zu gestalten, dass die dargelegten Nachteile des Standes der Technik vermieden werden, insbesondere dadurch, dass die beim Reversieren zurückgeförderten, im Erntegutstrom befindlichen Fremdkörper nicht mehr in das Vorsatzgerät gelangen.

Erfindungsgemäß wird die Aufgabe durch eine landwirtschaftliche Erntemaschine mit den kennzeichnenden Merkmalen des Anspruchs 1 gelöst.

Indem das von der wenigstens einen Adaptiereinrichtung der Erntemaschine aufgenommene Vorsatzgerät durch wenigstens ein Verstellmittel in zumindest eine zu den in Fahrtrichtung vorn liegenen Arbeitsorganen der landwirtschaftlichen Arbeitsmaschine beabstandete, einen Gutdurchtrittsspalt zwischen dem Vorsatzgerät und diesen Arbeitsorganen bildende Nichtarbeitsposition bewegbar ist, wird sichergestellt, dass das Vorsatzgerät im an die Erntemaschine adaptierten Zustand in eine zur Erntemaschine beabstandete Nichtarbeitsposition verschwenkt werden kann. Auf diese Weise wird in der Nichtarbeitsposition ein Durchtrittsspalt zwischen Vorsatzgerät und den in Fahtrichtung vorn liegenden Arbeitsorganen der landwirtschaftlichen Erntemaschine geschaffen, durch den der während des Reversiervorgangs aus der landwirtschaftlichen Erntemaschine herausgeförderte, mit einem oder mehreren Fremdkörpern durchsetzte Erntegutstrom in Richtung Boden abfließen kann. Durch eine deratige Ausführung gelangen die während des Reversiervorganges zurückgeförderten Fremdkörper nicht mehr in das Vorsatzgerät, sodass das zeitaufwendige und eine hohe Verletzungsgefahr in sich birgende Entfernen der Fremdkörper aus dem Vorsatzgerät entfällt.

Eine konstruktiv besonders einfach gestaltete Ausführung wird dann erreicht, wenn das Vorsatzgerät um eine von der Adaptiereinrichtung der landwirtschaftlichen Erntemaschine aufgenommene, quer zur Fahrtrichtung weisende Achse in die Nichtarbeitsposition verschwenkt werden kann.

Um bei der Verbringung des Vorsatzgerätes in die Nichtarbeitsposition einen Teil der Masse des Vorsatzgerätes weiterhin auf dem Boden abstützen zu können, wird in einer weiteren vorteilhaften Ausgestaltung der Erfindung ein Verschieben des Vorsatzgerätes relativ zu den Arbeitsorganen der landwirtschaftlichen Erntemaschine vorgeschlagen.

Eine konstuktiv einfache Ausführung der verschwenkbaren Anordnung des Vorsatzgerätes an der landwirtschaftlichen Erntemaschine wird dann erreicht, wenn die die quer zur Fahrtrichtung weisende Schwenkachse ausbildende Adaptiereinrichtung der landwirtschaftlichen Erntemaschine dem Vorsatzgerät obenseitig zugeordnet ist.

Sich den räumlichen Gegenbenheiten des von der Erntemaschine aufzunehmenden Vorsatzgerätes bauraumsparend anpassend, können das oder die die Lageänderung des Vorsatzgerätes auslösenden Verstellmittel dem Vorsatzgerät oben- oder untenseitig zugeordnet sein.

In einer weiteren vorteilhaften Ausgestaltung der Erfindung kann das wenigstens eine Verstellmittel als einfach- oder doppeltwirkender Hubzylinder ausgeführt sein, sodass eine problemlose Integration in den ohnehin am Trägerfahrzeug vorhandenen Hydraulikkreislauf möglich wird.

In vorteilhafter Weiterbildung der Erfindung kann das wenigstens eine Verstellmittel mit der Steuereinheit der Reversiereinrichtung gekoppelt sein, sodass auf konstruktiv einfache Weise stets sichergestellt ist, dass das Vorsatzgerät bereits in seine Nichtarbeitsposition verschwenkt ist, bevor der Reversiervorgang einsetzt. Im einfachsten Fall wird dies dadurch erreicht, dass die Steuereinheit der Reversiereinrichtung über ein vom Fahrer der Erntemaschine auszulösendes Einganssignal X1 aktiviert wird und die Steuereinrichtung hierauf selbsttätig ein Ausgangssignal Y1 in Form einer Druckbeaufschlagung des wenigstens einen Verstellmittels und zeitversetzt hierzu ein Ausgangssignal Y2 zur Einschaltung der Reversiereinrichtung generiert.

In einer weiteren vorteilhaften Ausgestaltung der Erfindung kann das wenigstens eine Verstellmittel von einem kostengünstigen einfachwirkenden Hubzylinder gebildet werden, wobei das Vorsetzgerät allein durch Schwerkraftwirkung von der Nichtarbeitsposition in die Arbeitsposition zurückschwenkt. Damit auch in der Arbeitsposition das Vorsatzgerät sicher an der landwirtschaftlichen Erntemaschine lagefixiert ist, kann beim Einsatz von einfachwirkenden Hubzylindern eine an sich bekannte Endlagenverriegelung zwischen Vorsatzgerät und landwirtschaftlicher Erntemaschine vorgesehen sein.

Um auf eine zusätzliche Endlagenverriegelung verzichten zu können und dennoch eine Lagefixierung des Vorsatzgerätes in der Arbeitstellung zu erhalten, kann in einer weitem vorteilhaften Ausführung das wenigstens eine Verstellmittel als doppeltwirkender Hubzylinder ausgeführt sein, der auch in der Arbeitsposition des Vorsatzgerätes fortdauernd druckbeaufschlagt bleibt und so die Lagefixierung des Vorsatzgerätes in der Arbeitsposition sicherstellt. Zudem kann mittels doppeltwirkender Hubzylinder auf konstruktiv einfache Weise eine Verschiebung des Vorsatzgerätes relativ zu den Arbeitsorganen der landwirtschaftlichen Erntemaschine erreicht werden.

Damit während der Lageänderung des Vorsatzgerätes die Verletzungsgefahr für Personen und der Verschleiß am Vorsatzgerät gering bleiben, kann in einer weiteren vorteilhaften Ausgestaltung der Erfindung eine Abschaltung des Antriebs des Vorsatzgerätes beim Bewegen in die Nichtarbeitsposition und zurück vorgesehen sein. Im einfachsten Fall wird die Abschaltung des Antriebs des Vorsatzgerätes durch in den Antrieb integrierte, an sich bekannte Schnellkuppelsysteme realisiert.

Unter dem Gesichtspunkt einer kostengünstigen Gestaltung des Antriebs des Vorsatzgerätes kann in einer weiteren vorteilhaften Ausgestaltung auf eine Abschaltung des Antriebs während der Lageänderung des Vorsatzgerätes verzichtet werden, wobei dem Antriebsstrang dann im einfachsten Fall wenigstens eine an sich bekannte teleskopierbare Gelenkwelle zugeordnet ist.

Da die Wurfbahn des während des Reversiervorganges aus der landwirtschaftlichen Erntemaschine herausgeförderten Gutes maßgeblich von der Beschaffenheit des Erntegutes und der Masse der darin befindlichen Fremdkörper abhängt, kann in vorteilhafter Weiterbildung der Erfindung dem Vorsatzgerät in seinem rückwärtigen Bereich ein Erntegutabweiser zugeordnet sein, der sicherstellt, dass auch weiter fliegendes Erntegut mit in ihm befindlichen Fremdkörpern nicht in das Vorsatzgerät gelangt. Um das Abfließen des auf dem Erntegutabweißer auftreffenden Erntegutes zu unterstützen, kann der Erntegutabweiser als Winkelblech ausgeführt sein, wobei er aufgrund seines erhöhten Verschleißes vorteilhafterweise lösbar und damit einfach austauschbar am Vorsatzgerät angeordnet ist.

Weitere vorteilhafte Ausgestaltungen sind Gegenstand weiterer Unteransprüche und werden nachfolgend anhand von Zeichnungen näher erläutert.

Es zeigen
- Figur 1: ein erstes Ausführungsbeispiel der erfindungsgemäßen Erntemaschine in Seitenansicht
- Figur 2: eine Draufsicht der erfindungsgemäßen Erntemaschine nach Figur 1
- Figur 3: eine Detailansicht der Schwenksteuerung des Vorsatzgerätes nach Figur 1
- Figur 4: ein zweites Ausführungsbeispiel der erfindungsgemäßen Erntemaschine in Seitenansicht

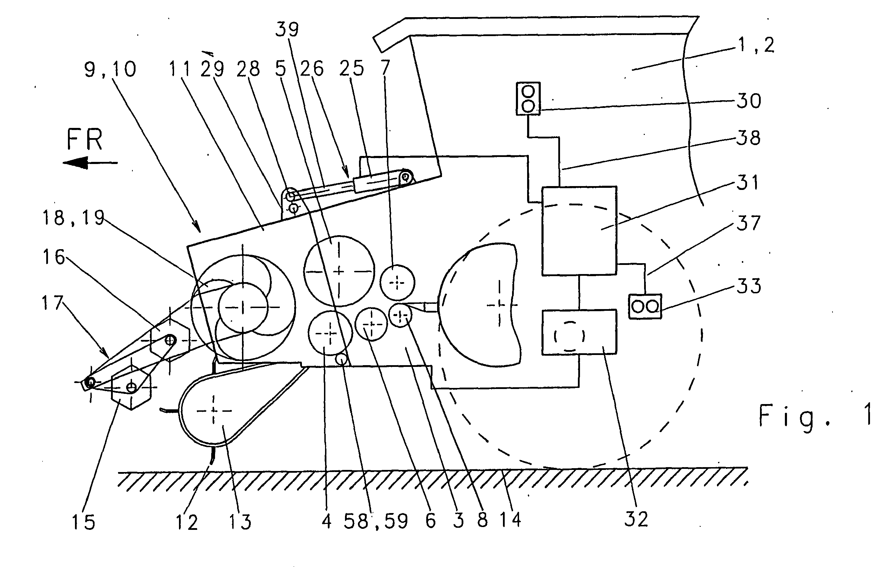

In Figur 1 ist schematisch eine als Feldhäcksler 2 ausgeführte landwirtschaftliche Erntemaschine 1 dargestellt, die in ihrem frontseitigen Bereich über ein Einzugsgehäuse 3 verfügt, dem eine beliebige Anzahl von Einzugs- und Vorpresswalzen 4-8 zugeordnet sind. Das Einzugsgehäuse 3 der landwirtschaftlichen Erntemaschine 1 nimmt in seinem in Fahrtrichtung FR vorn liegenden Bereich in erfindungsgemäßer und im Folgenden näher beschriebener Weise ein als Pick-up 9 ausgeführtes Vorsatzgerät 10 auf. Die Pick-up 9 wird von einem schematisch dargestellten Tragrahmen 11 gebildet, dem bodenseitig eine mit Förderzinken 12 versehene Aufsammeltrommel 13 zugeordnet ist, die mittels der Förderzinken 12 auf dem Boden 14 liegendes Erntegut oberschlächtig fördernd aufnimmt, wobei zur Vergleichmäßigung der Dicke der aufgenommenen Gutmatte die Aufsammeltrommel 13 mit einem in vertikaler Richtung über der Aufsammeltrommel 13 am Tragrahmen 11 fixierten und gegebenfalls in der Höhe einstellbaren und von zwei frei drehbaren Förderwalzen 15, 16 gebildeten Niederhalter 17 in Wirkverbindung steht. Im rückwärtigen Bereich der Förderwalzen 15, 16 und oberhalb der Aufsammeltrommel 13 verfügt die Pick-up 9 über ein als Querförderschnecke 18 ausgeführtes Querförderorgan 19, welches das von der Aufsammeltrommel 13 aufgenommene Erntegut mittig zusammenführt und in einem Erntegutstrang geringerer Breite an die in Fahrtrichtung vorn liegenden Arbeitsorgane 4, 5 der landwirtschaftlichen Erntemaschine 1 übergibt.

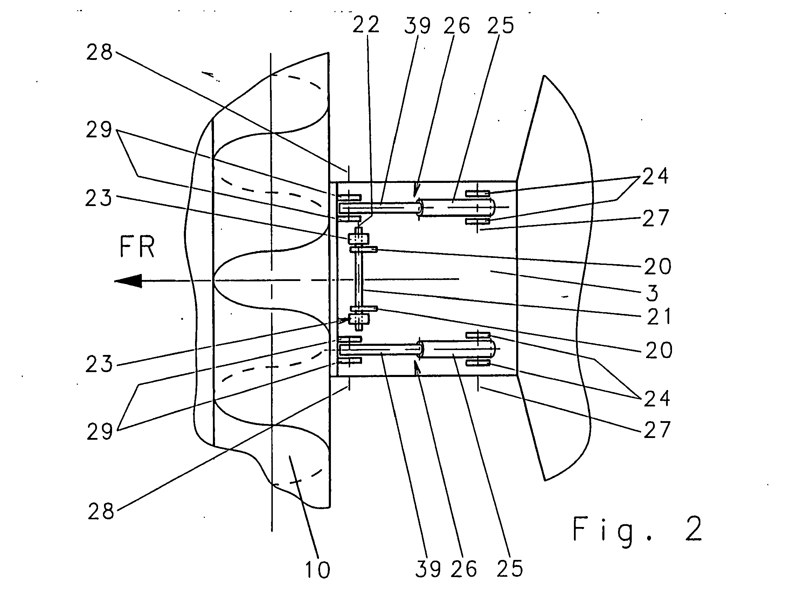

In einem ersten Ausführungsbeispiel gemäß der Figuren 1 und 2 nimmt das Einzugsgehäuse 3 obenseitig Befestigungsflansche 20 auf, die von einer quer zur Fahrtrichtung FR weisenden, im einfachsten Fall als Bolzen 21 ausgeführten Achse 22 durchsetzt werden. Der die Schwenkachse 22 bildende Bolzen 21 durchgreift ferner in seinen Endbereichen fest mit dem Vorsatzgerät 10 verbundene Halteflansche 23 und ist außerhalb dieser Halteflansche 23 in an sich bekannter und deshalb nicht näher dargestellter Weise gegen axiales Verschieben gesichert. Trägerfahrzeugseitig verfügt das Einzugsgehäuse 3 über weitere fest mit dem Einzugsgehäuse 3 verbundene Flansche 24, die zwischen sich das kolbenseitige Ende der als Hubzylinder 25 ausgeführten Verstellmittel 26 um eine quer zur Fahrtrichtung FR weisende Achse 27 drehbar aufnehmen. Das kolbenstangenseitige Ende der Hubzylinder 25 wird um eine ebenfalls quer zur Fahrtrichtung FR verlaufende Achse 28 drehbar von am Vorsatzgerät 10 drehfest angeordneten Halteflanschen 29 aufgenommen.

Die landwirtschaftliche Erntemaschine 1 weist ferner in an sich bekannter Weise Schaltelemente 30 auf, über die eine noch näher zu beschreibende Steuereinheit 31 angesteuert werden kann, die im dargestellten Ausführungsbeispiel mit einer ebenfalls noch näher zu beschreibenden Reversiereinrichtung 32 gekoppelt ist, mit deren Hilfe die Drehrichtung wenigstens eines der in Fahrtrichtung FR vorn liegenden Arbeitsorgane 4 der landwirtschaftlichen Erntemaschine 1 umgekehrt werden kann. Zur Erzeugung des Druckölstromes verfügt die landwirtschaftliche Erntemaschine 1 zudem über eine hydraulische Pumpe 33.

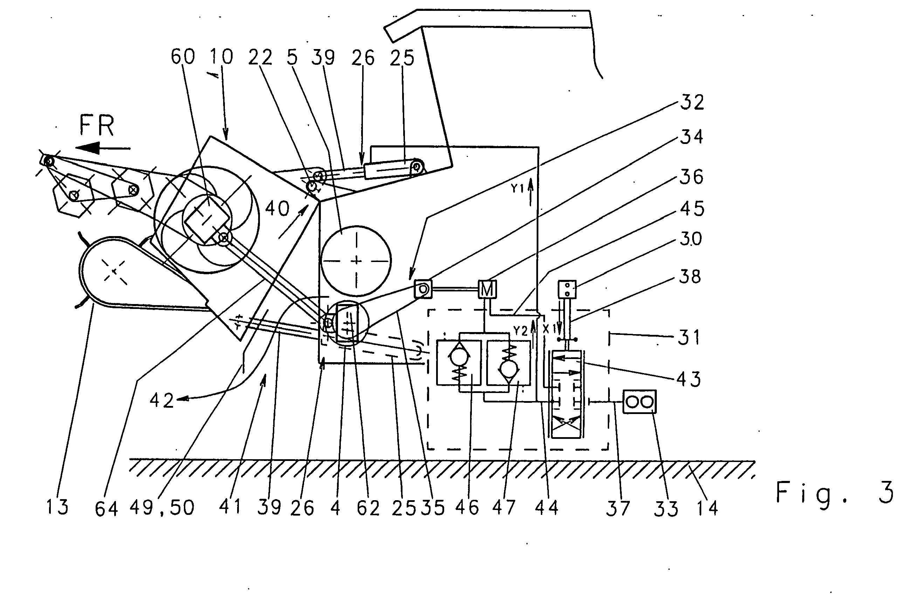

Gemäß Figur 3 wird die Reversiereinrichtung 32 von einem Reversiergetriebe 34 gebildet, welches einfachstenfalls über einen Riementrieb 35 mit der in Fahrtrichtung FR vorn und unten liegenden Einzugs- und Preßwalze 4 in Wirkverbindung steht, wobei das Reversiergetriebe 34 seine Antriebsenergie von einem Hydromotor 36 bezieht. Dem Hydromotor 36 ist die Steuereinheit 31 zugeordnet, die über Leitungssysteme 37, 38 mit den Schaltelementen 30 und der hydraulischen Pumpe 33 der landwirtschaftlichen Erntemaschine 1 verbunden ist.

In der Arbeitsposition gemäß der Figuren 1 und 2 befinden sich die Kolbenstangen 39 der Hubzylinder 25 in ausgeschobener Position, sodass das Vorsatzgerät 10 unmittelbar vor den in Fahrtrichtung FR vorn liegenden Arbeitsorganen 4-8 der landwirtschaftlichen Erntemaschine 1 angeordnet ist. Werden nun die als einfach wirkende Hubzylinder 25 ausgeführten Verstellmittel 26 in noch näher zu beschreibender Weise druckbeaufschlagt, so bewegt sich die Kolbenstange 39 in den jeweiligen Hubzylinder 25 hinein, wobei das Vorsatzgerät gemäß Figur 3 um die Schwenkachse 22 der von einem Bolzen 21 und Befestigungsflanschen 20 gebildeten wenigstens einen Adaptiereinrichtung 40 in eine Nichtarbeitsposition verschwenkt. In dieser Nichtarbeitsposition nimmt das Vorsatzgerät 10 eine solche Lage zu den in Fahrtrichtung vorn liegenden Arbeitsorganen 4, 5 der landwirtschaftlichen Erntemaschine 1 ein, dass sich zwischen dem Vorsatzgerät 10 und diesen Arbeitsorganen 4, 5 ein Gutdurchtrittsspalt 41 ausbildet, durch den beim Reversieren wenigstens der unteren vorderen Einzugs- und Vorpresswalze 4 das von dieser Einzugs- und Vorpresswalze 4 und der mit ihr in Wirkverbindung stehenden Einzugs- und Vorpresswalze 5 gemäß Pfeilrichtung 42 aus dem Einzugsgehäuse 3 herausgeförderte Erntegut direkt auf den Boden 14 gelangt ohne wieder in den Bereich der Arbeitsorgane 13, 18 des Vorsatzgerätes 10 geworfen zu werden. Sind die Verstellmittel 26 als einfach wirkende Hubzylinder 25 ausgeführt schwenkt das Vorsatzgerät 10 bei Druckentlastung der Hubzylinder 25 selbsttätig wieder in die in Figur 1 dargestellte Arbeitsposition.

In einer weiteren erfindungsgemäßen Ausführung kann auch nur die Adaptiereinrichtung 40 obenseitig dem Vorsatzgerät 10 zugeordnet sein, während das wenigstens eine Verstellmittel 26 , wie in Figur 3 punktiert dargestellt, das Vorsatzgerät 10 untenseitig mit dem Einzugsgehäuse 3 der landwirtschaftlichen Erntemaschine 1 verbindet. Bei einer derartigen Ausführung wären dann einfach wirkende Hubzylinder 25 vorzusehen, deren Kolbenstange 39 bei Druckbeaufschlagung zum Verschwenken des Vorsatzgerätes 10 in die Nichtarbeitsposition aus dem Hubzylinder 25 herausgeschoben wird.

Damit gewährleistet ist, dass das Vorsatzgerät 10 stets seine Nichtarbeitsposition erreicht hat, bevor der das Erntegut aus dem Einzugsgehäuse herausfordernde Reversiervorgang einsetzt, ist der den Reversiervorgang auslösende Hydromotor 36 über die bereits erwähnte Steuereinrichtung 31 mit den Verstellelementen 30 und der hydraulischen Pumpe 33 der landwirtschaftlichen Erntemaschine 1 verbunden. Die Steuereinrichtung 31 verfügt über ein Wegeventil 43 welches über Leitungssystem 38 von den Stellelementen 30 der landwirtschaftlichen Erntemaschine 1 angesteuert werden kann. Dem Wegeventil 43 ist eingangsseitig das Leitungssystem 37 zugeordnet, welches den Druckölstrom der hydraulischen Pumpe 33 zuführt. Ausgangsseitig ist dem Wegeventil 43 ein Leitungssystem 44 zugeordnet, welches das Wegeventil 43 mit dem jeweiligen Verstellmittel 26 und über eine Rückschlagventilkombination 46, 47 mit dem Hydromotor 36 des Reversiergetriebes 34 verbindet. Ein weiteres Leitungssystem 45 koppelt das Wegeventil 43 direkt mit dem Hydromotor 36.

Zur Aktivierung des Reversiervorganges wird über die Steuerelemente 30 ein Eingangssignal X1 ausgelöst, welches das Wegeventil 43 in die in Figur 3 gezeigte Stellung schaltet, wobei der von der hydraulischen Pumpe 33 erzeugte Druckölstrom in das Leitungssystem 44 gelangt. Dies führt zu einer Druckbeaufschlagung des jeweiligen Verstellelementes 26, wobei zuerst das Vorsatzgerät 10 in die Nichtarbeitsposition verschwenkt (Ausgangssignal Y1). Nachdem das Vorsatzgerät 10 die Nichtarbeitsposition erreicht hat, steigt der Druck im Leitungssystem 44 solange weiter an, bis das Rückschlagventil 47 öffnet (Ausgangssignal Y2) und der Hydromotor 36 über das Reversiergetriebe 34 den Reversiervorgang an der unteren Einzugs- und Vorpresswalze 4 auslöst, wobei über Leitungssystem 45 das energieübertragende Medium vom Hydromotor 36 wieder zurück in den nicht dargestellten Vorratsbehälter fließen kann. In einer weiteren Schaltstellung des Wegeventils 43 können beide Leitungssysteme 44, 45 gesperrt werden, sodass das Vorsatzgerät 10 in der Nichtarbeitsposition verharrt und der Antrieb der in Fahrtrichtung vorn liegenden Arbeitsorgane 4-8 der landwirtschaftlichen Erntemaschine 1 abgeschaltet ist. In einer dritten Schaltstellung des Wegeventils 43 ist das Leitungssystem 44 drucklos, sodass das Vorsatzgerät 10 allein durch Schwerkraftwirkung wieder zurück in seine Arbeisposition verschwenkt während Leitungssystem 45 druckbeaufschlagt wird und die in Fahrtrichtung vorn liegenden Arbeitsorgane 4-8 der landwirtschaftlichen Erntemaschine 1 wieder ernteguteinziehend umlaufen.

Damit der beim Reversieren aus dem Einzugsgehäuse 3 gemäß Pfeilrichtung 42 herausgeförderte Erntegutstrom nicht wieder in das Vorsatzgerät 3 oder den Aufnahmebereich der dem Vorsatzgerät zugeordneten Aufsammeltrommel 13 gefördert wird, kann dem Vorsatzgerät in seinem rückwärtigen Bereich ein Erntegutabweiser 49 zugeordnet sein, der in vorteilhafter Weise als Winkelblech 50 ausgeführt ist, welches lösbar im rückwärtigen Bereich des Vorsatzgerätes 10 an diesem befestigt ist, sodass bei auftretendem Verschleiß ein einfacher Austausch dieses Erntegutabweisers 49 möglich wird.

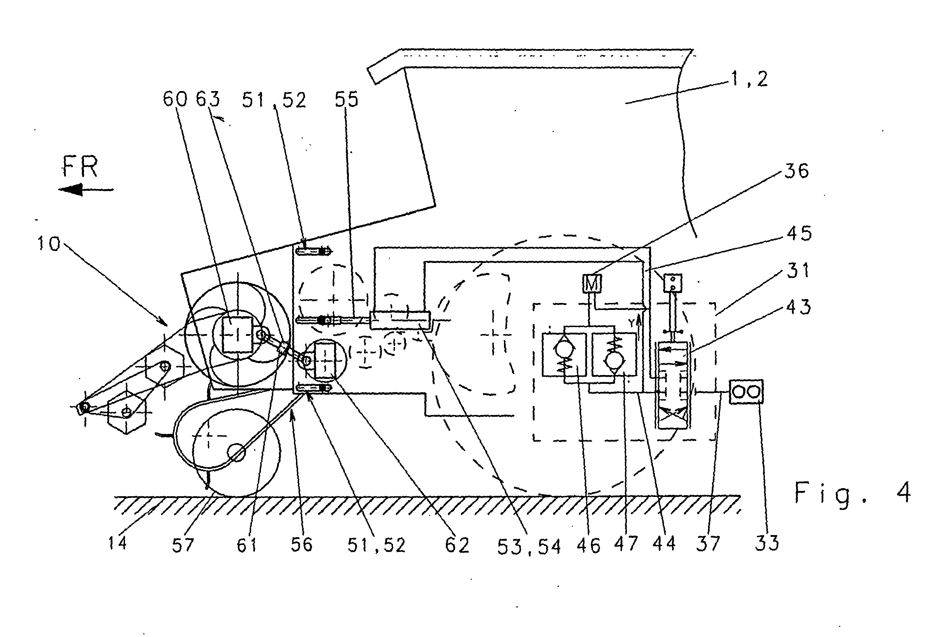

In einer weiteren Ausführungsform gemäß Figur 4 kann die Adaptiereinrichtung 51 der landwirtschaftlichen Erntemaschine 1 auch als Schubgelenk 52 ausgeführt sein, wobei das wenigstens eine Verstellmittel 53 das Vorsatzgerät 10 mit der landwirtschaftlichen Erntemaschine 1 an beliebiger Stelle verbindet und im einfachsten Fall von einem doppeltwirkenden Hubzylinder 54 gebildet wird. Eine Druckbeaufschlagung des oder der Hubzylinder 54 führt zu einem Aus- oder Einfahren der Kolbenstange 55 , wobei das Vorsatzgerät 10 mittels der Schubgelenke 52 in oder entgegen der Fahrtrichtung FR bewegt werden kann, sodass sich ebenfalls ein Gutdurchtrittsspalt 56 ergibt, durch den der beim Reversieren aus dem Einzugsgehäuse 3 herausgeförderte Erntegutstrom nicht wieder in das Vorsatzgerät 10 gelangt. Es liegt im Rahmen der Erfindung, dass auch bei einer derartigen Ausführung dem Vorsatzgerät 10 in seinem rückwärtigen Bereich ein Erntegutabweiser 49, 50 gemäß der Ausführung nach Figur 3 zugeordnet sein kann. Verfügt das Vorsatzgerät 10 zudem über wenigstens ein Laufrad 57 ist die Verschiebung des Vorsatzgerätes zur Erlangung des Gutdurchtrittsspaltes 56 vorallem deshalb besonders vorteilhaft, da die Verstellmittel 53 und die wenigstens eine Adaptiereinrichtung 51 nicht die gesamte Masse des Vorsatzgerätes tragen müssen, da ein Teil der Masse über das wenigstens eine Laufrad 57 auf dem Boden 14 abgestützt werden kann. Indem Leitungssystem 45 nun mit dem zweiten Anschluss des doppeltwirkenden Hubzylinders 54 verbunden ist, kann der Hubzylinder 54 in der Arbeitsstellung gleichzeitig eine Verriegelungsfunktion zwischen Vorsatzgerät 10 und landwirtschaftlicher Erntemaschine 1 übernehmen. Dieser gleiche Effekt kann an der erfindungsgemäßen Ausführung nach Figur 2 dann erreicht werden, wenn der oder die einfachwirkenden Hubzylinder 25 durch doppeltwirkende Hubzylinder 54 entsprechend Figur 4 ersetzt werden, wobei jeweils die in der Arbeitsstellung druckbeaufschlagte Seite des Hubzylinders 54 mit dem Leitungssystem 45 verbunden ist.

Es liegt im Rahmen der Erfindung, dass beim Einsatz einfachwirkender Hubzylinder 25 gemäß Figur 1 zusätzliche mechanische oder hydraulische Verriegelungselemente 58 vorgesehen sein können, die das Vorsatzgerät 10 in der Arbeitsstellung im seinem unteren Bereich mit der landwirtschaftlichen Erntemaschine 1 verbinden, wobei hierfür an sich bekannte und deshalb nicht näher dargestellte mechanische oder hydraulische Verriegelungselemente 59 wie Absteckbolzen oder Hubzylinder verwendet werden können.

Um den Verschleiß am Vorsatzgerät 10 beim Verbringen in die Nichtarbeitsposition gering zu halten, kann in einer weiteren Ausführungsform eine Abschaltung des Antriebs 60 des Vorsatzgerätes 10 vorgesehen werden. Im einfachsten Fall wird dies dadurch erreicht, dass der Antrieb 60 des Vorsatzgerätes 10 über an sich bekannte Schnellkuppelsysteme 61 mit einem Antriebsgetriebe 62 der landwirtschaftlichen Erntemaschine 1 verbunden ist, wobei die Eingriffselemente 63 des Schnellkuppelsystems 61 selbsttätig aus- und einkuppeln.

Um andererseits eine kostengünstige Antriebsgestaltung zu erhalten, kann in einer weiteren Ausführungsform der Antrieb 60 des Vorsatzgerätes 10 über eine teleskopierbare Gelenkwelle 64 mit einem Abtriebsgetriebe 62 der landwirtschaftlichen Erntemaschine verbunden sein, wobei eine Abschaltung des Antriebs des Vorsatzgerätes 10 nicht erfolgt.

Es liegt im Rahmen der Erfindung, dass das im Ausführungsbeispiel als Pick-up 9 ausgeführte Vorsatzgerät 10 durch ein beliebiges Vorsatzgerät ersetzt sein kann.

### Bezugszeichenliste

- 1: landwirtschaftliche Erntemaschine
- 2: Feldhäcksler
- 3: Einzugsgehäuse
- 4-8: Einzugs- und Vorpresswalzen
- 9: Pick-up
- 10: Vorsatzgerät
- 11: Tragrahmen
- 12: Förderzinken
- 13: Aufsammeltrommel
- 14: Boden
- 15: Förderwalze
- 16: Förderwalze
- 17: Niederhalter
- 18: Querförderschnecke
- 19: Querförderorgan
- 20: Befestigungsflansch
- 21: Bolzen
- 22: Achse
- 23: Halteflansch
- 24: Flansch
- 25: Hubzylinder
- 26: Verstellmittel
- 27: Achse
- 28: Achse
- 29: Halteflansch
- 30: Schaltelemente
- 31: Steuereinheit
- 32: Reversiereinrichtung
- 33: hydraulische Pumpe
- 34: Reversiergetriebe
- 35: Riementrieb
- 36: Hydromotor
- 37: Leitungssystem
- 38: Leitungssystem
- 39: Kolbenstange
- 40: Adaptiereinrichtung
- 41: Gutdurchtrittsspalt
- 42: Pfeilrichtung
- 43: Wegeventil
- 44: Leitungssystem
- 45: Leitungssystem
- 46: Rückschlagventil
- 47: Rückschlagventil
- 48:
- 49: Erntegutabweiser
- 50: Winkelblech
- 51: Adaptiereinrichtung
- 52: Schubgelenk
- 53: Verstellmittel
- 54: Hubzylinder
- 55: Kolbenstange
- 56: Gutdurchtrittsspalt
- 57: Laufrad
- 58: Verriegelungselemente
- 59: Verriegelungselemente
- 60: Antrieb
- 61: Schnellkuppelsystem
- 62: Antriebsgetriebe
- 63: Eingriffselemente
- 64: Gelenkwelle
- FR: Fahrtrichtung
- X1: Eingangssignal
- Y1: Ausgangssignal
- Y2: Ausgangssignal

## Patentansprüche

1. Landwirtschaftliche Erntemaschine (1) mit wenigstens einer Adaptiereinrichtung zur Aufnahme eines Vorsatzgerätes (10), wobei wenigstens einem der in Fahrtrichtung vorn liegenden Arbeitsorgane (4-8) der landwirtschaftlichen Erntemaschine (1) eine mechanisch und/oder hydraulisch schaltbare Reversiereinrichtung (32) zugeordnet ist,
**dadurch gekennzeichnet,**
**dass** das von der wenigstens einen Adaptiereinrichtung (40, 51) aufgenommene Vorsatzgerät (10) durch wenigstens ein Verstellmittel (26, 53) in zumindest eine zu den in Fahrtrichtung (FR) vorn liegenden Arbeitsorganen (4-8) der landwirtschaftlichen Erntemaschine (1) beabstandete, einen Gutdurchtrittsspalt (41, 56) zwischen dem Vorsatzgerät (10) und diesen Arbeitsorganen (4-8) bildende Nichtarbeitsposition bewegbar ist.

2. Landwirtschaftliche Erntemaschine nach Anspruch 1,
**dadurch gekennzeichnet,**
**dass** die zu den in Fahrtrichtung (FR) vorn liegenden Arbeitsorganen (4-8) beabstandete Nichtarbeitsposition des Vorsatzgerätes (10) durch Schwenken des Vorsatzgerätes (10) um wenigstens eine von der Adaptiereinrichtung (40) aufgenommene quer zur Fahrtrichtung (FR) weisende Achse (22) erreicht wird.

3. Landwirtschaftliche Erntemaschine nach Anspruch 1,
**dadurch gekennzeichnet,**
**dass** die zu den in Fahrtrichtung (FR) vorn liegenden Arbeitsorganen (4-8) beabstandete Nichtarbeitsposition des Vorsatzgerätes (10) durch Verschieben des Vorsatzgerätes (10) im Bereich der Adaptiereinrichtung (51) relativ zu den in Fahrtrichtung (FR) vorn liegenden Arbeitsorganen (4-8) erreicht wird.

4. Landwirtschaftliche Erntemaschine nach Anspruch 2,
**dadurch gekennzeichnet,**
**dass** die die quer zur Fahrtrichtung (FR) weisende Achse (22) ausbildende Adaptiereinrichtung (40) dem Vorsatzgerät (10) obenseitig zugeordnet ist.

5. Landwirtschaftliche Erntemaschine nach einem oder mehreren der vorhergehenden Ansprüche,
**dadurch gekennzeichnet,**
**dass** das wenigstens eine Verstellmittel (26, 53) oben- oder untenseitig dem Vorsatzgerät (10) zugeordnet ist.

6. Landwirtschaftliche Erntemaschine nach einem oder mehreren der vorhergehenden Ansprüche,
**dadurch gekennzeichnet,**
**dass** das wenigstens eine Verstellmittel (26, 53) als einfach- oder doppeltwirkender Hubzylinder (25, 54) ausgeführt ist.

7. Landwirtschaftliche Erntemaschine nach einem oder mehreren der vorhergehenden Ansprüche,
**dadurch gekennzeichnet,**
**dass** die Reversiereinrichtung (32) über eine Steuereinheit (31) mit dem wenigstens einen Verstellmittel (26, 53) in der Weise gekoppelt ist, dass ein an der Steuereinheit (31) anliegendes Eingangssignal X1 selbsttätig ein erstes Ausgangssignal Y1 zur Betätigung des wenigstens einen Verstellmittels (26, 53) und zeitversetzt dazu ein zweites Ausgangssignal Y2 zur Betätigung der Reversiereinrichtung (32) auslöst.

8. Landwirtschaftliche Erntemaschine nach Anspruch 7,
**dadurch gekennzeichnet,**
**dass** die Betätigung des wenigstens einen Verstellmittels (26, 53) durch Ausgangssignal Y1 ein Bewegen des Vorsatzgerätes (10) in die wenigstens eine Nichtarbeitsposition hervorruft.

9. Landwirtschaftliche Erntemaschine nach einem oder mehreren der vorhergehenden Ansprüche,
**dadurch gekennzeichnet,**
**dass** das Verstellmittel (26) als einfachwirkender Hubzylinder (25) ausgeführt ist und das Rückschwenken des Vorsatzgerätes (10) von der wenigstens einen Nichtarbeitsposition in die Arbeitsposition durch Schwerkraftwirkung erfolgt.

10. Landwirtschaftliche Erntemaschine nach Anspruch 9,
**dadurch gekennzeichnet,**
**dass** das Vorsatzgerät (10) in der Arbeitsposition eine an sich bekannte mechanische und/oder hydraulische Endlagenverriegelungen (58, 59) aufweist.

11. Landwirtschaftliche Erntemaschine nach einem oder mehreren der Ansprüche 1 bis 8,
**dadurch gekennzeichnet,**
**dass** das wenigstens eine Verstellmittel (53) als doppeltwirkender Hubzylinder (54) ausgeführt ist und das Rückbewegen des Vorsatzgerätes (10) von der wenigstens einen Nichtarbeitsposition in die Arbeitsposition durch Druckbeaufschlagung des Verstellmittels (53) erfolgt und in der Arbeitsposition das Vorsatzgerät (10) durch fortdauernde Druckbeaufschlagung des wenigstens einen Verstellmittels (53) lagefixiert wird.

12. Landwirtschaftliche Erntemaschine nach einem oder mehreren der vorhergehenden Ansprüche,
**dadurch gekennzeichnet,**
**dass** der Antrieb (60) des Vorsatzgerätes (10) beim Bewegen in die wenigstens eine Nichtarbeitsposition unterbrochen wird.

13. Landwirtschaftliche Erntemaschine nach Anspruch 12,
**dadurch gekennzeichnet,**
**dass** der Antrieb (60) des Vorsatzgerätes (10) mit dem Vorsatzgerät (10) über ein an sich bekanntes Schnellkuppelsystem (61) in Wirkverbindung steht.

14. Landwirtschaftliche Erntemaschine nach einem oder mehreren der Ansprüche 1 bis 11,
**dadurch gekennzeichnet,**
**dass** der Antrieb (60) des Vorsatzgerätes (10) beim Bewegen in die wenigstens eine Nichtarbeitsposition nicht unterbrochen wird.

15. Landwirtschaftliche Erntemaschine nach Anspruch 14,
**dadurch gekennzeichnet,**
**dass** der Antrieb (60) des Vorsatzgerätes (10) mit dem Vorsatzgerät (10) über eine an sich bekannte teleskopierbare Gelenkwelle (64) in Wirkverbindung steht.

16. Landwirtschaftliche Erntemaschine nach einem oder mehreren der vorhergehenden Ansprüche,
**dadurch gekennzeichnet,**
**dass** dem Vorsatzgerät (10) im rückwärtigen Bereich ein Erntegutabweiser (49) zugeordnet ist.

17. Landwirtschaftliche Erntemaschine nach Anspruch 16,
**dadurch gekennzeichnet,**
**dass** der Erntegutabweiser (49) von einem lösbar am Vorsatzgerät (10) angeordneten Winkelblech (50) gebildet wird.

## Claims

1. An agricultural harvester (1) comprising at least one adapter device for receiving a front-mounted implement (10), wherein a mechanically and/or hydraulically switchable reversing device (32) is associated with at least one of the working members (4-8), which are at the front in the direction of travel, of the agricultural harvester (1),
**characterised in that**
the front-mounted implement (10) received by the at least one adapter device (40, 51) is movable by at least one displacement means (26, 53) into at least one non-working position which is spaced relative to the working members (4-8) of the agricultural harvester (1), which are at the front in the direction of travel (FR), and which forms a material passage gap (41, 56) between the front-mounted implement (10) and said working members (4-8).

2. An agricultural harvester according to claim 1 **characterised in that** the non-working position of the front-mounted implement (10), which is spaced in relation to the working members (4-8) which are at the front in the direction of travel (FR), is reached by pivotal movement of the front-mounted implement (10) about at least one shaft (22) which is mounted by the adapter device (40) and which is disposed transversely with respect to the direction of travel (FR).

3. An agricultural harvester according to claim 1 **characterised in that** the non-working position of the front-mounted implement (10), which is spaced in relation to the working members (4-8) which are at the front in the direction of travel (FR), is reached by displacement of the front-mounted implement (10) in the region of the adapter device (51) relative to the working members (4-8) which are at the front in the direction of travel (FR).

4. An agricultural harvester according to claim 2 **characterised in that** the adapter device (40) forming the shaft (22) disposed transversely with respect to the direction of travel (FR) is associated with the front-mounted implement (10) at the top side.

5. An agricultural harvester according to one or more of the preceding claims **characterised in that** the at least one displacement means (26, 53) is associated with the front-mounted implement (10) at the top side or the underside.

6. An agricultural harvester according to one or more of the preceding claims **characterised in that** the at least one displacement means (26, 53) is in the form of a single-acting or double-acting stroke cylinder (25, 54).

7. An agricultural harvester according to one or more of the preceding claims **characterised in that** the reversing device (32) is coupled by way of a control unit (31) to the at least one displacement means (26, 53) in such a way that an input signal X1 applied to the control unit (31) automatically triggers a first output signal Y1 for actuation of the at least one displacement means (26, 53) and in time-displaced relationship therewith a second output signal Y2 for actuation of the reversing device (32).

8. An agricultural harvester according to claim 7 **characterised in that** actuation of the at least one displacement means (26, 53) by the output signal Y1 causes a movement of the front-mounted implement (10) into the at least one non-working position.

9. An agricultural harvester according to one or more of the preceding claims **characterised in that** the displacement means (26) is in the form of a single-acting stroke cylinder (25) and the reverse pivotal movement of the front-mounted implement (10) from the at least one non-working position into the working position takes place due to the action of the force of gravity.

10. An agricultural harvester according to claim 9 **characterised in that** the front-mounted implement (10) in the working position has a per se known mechanical and/or hydraulic end position locking means (58, 59).

11. An agricultural harvester according to one or more of claims 1 to 8 **characterised in that** the at least one displacement means (53) is in the form of a double-acting stroke cylinder (54) and the reverse movement of the front-mounted implement (10) from the at least one non-working position into the working position is effected by pressure actuation of the displacement means (53) and the front-mounted implement (10) is fixed in the working position by persistent pressure actuation of the at least one displacement means (53).

12. An agricultural harvester according to one or more of the preceding claims **characterised in that** the drive (60) of the front-mounted implement (10) is interrupted upon movement into the at least one non-working position.

13. An agricultural harvester according to claim 12 **characterised in that** the drive (60) of the front-mounted implement (10) is operatively connected to the front-mounted implement (10) by way of a per se known quick-action coupling system (61).

14. An agricultural harvester according to one or more of claims 1 to 11 **characterised in that** the drive (60) of the front-mounted implement (10) is not interrupted upon movement into the at least one non-working position.

15. An agricultural harvester according to claim 14 **characterised in that** the drive (60) of the front-mounted implement (10) is operatively connected to the front-mounted implement (10) by way of a per se known telescopic universal-joint shaft (64).

16. An agricultural harvester according to one or more of the preceding claims **characterised in that** a crop material deflector (49) is associated with the front-mounted implement (10) in the rearward region.

17. An agricultural harvester according to claim 16 **characterised in that** the crop material deflector (49) is formed by an angle plate (50) arranged releasably on the front-mounted implement (10).

## Revendications

1. Machine agricole de récolte (1) avec au moins un dispositif d'adaptation pour recevoir un outil frontal (10), un dispositif d'inversion de marche à commutation mécanique et/ou hydraulique (32) étant associé à au moins un des organes de travail (4-8), disposés à l'avant par rapport à la direction de déplacement, de la machine agricole de récolte (1), **caractérisée en ce que** l'outil frontal (10) reçu par le dispositif d'adaptation au nombre d'au moins un (40, 51) est déplaçable par l'intermédiaire d'au moins un moyen de déplacement (26, 53) dans au moins une position de non-travail qui est distante des organes de travail (4-8), disposés à l'avant par rapport à la direction de déplacement (FR), de la machine agricole de récolte (1) et qui forme un intervalle de passage de produit (41, 56) entre l'outil frontal (10) et ces organes de travail (4-8).

2. Machine agricole de récolte selon la revendication 1, **caractérisée en ce que** la position de non-travail de l'outil frontal (10), distante des organes de travail (4-8) disposés à l'avant par rapport à la direction de déplacement (FR), est atteinte par pivotement de l'outil frontal (10) autour d'au moins un axe (22) logé dans le dispositif d'adaptation (40) et orienté transversalement à la direction de déplacement (FR).

3. Machine agricole de récolte selon la revendication 1, **caractérisée en ce que** la position de non-travail de l'outil frontal (10), distante des organes de travail (4-8) disposés à l'avant par rapport à la direction de déplacement (FR), est atteinte par coulissement de l'outil frontal (10) dans la zone du dispositif d'adaptation (51) relativement aux organes de travail (4-8) disposés à l'avant par rapport à la direction de déplacement (FR).

4. Machine agricole de récolte selon la revendication 2, **caractérisée en ce que** le dispositif d'adaptation (40) comportant l'axe (22) orienté transversalement à la direction de déplacement (FR) est associé à l'outil frontal (10) dans la partie haute de celui-ci.

5. Machine agricole de récolte selon une ou plusieurs des revendications précédentes, **caractérisée en ce que** le moyen de déplacement au nombre d'au moins un (26, 53) est associé à l'outil frontal (10) dans les parties haute et basse de celui-ci.

6. Machine agricole de récolte selon une ou plusieurs des revendications précédentes, **caractérisée en ce que** le moyen de déplacement au nombre d'au moins un (26, 53) est conformé en vérin à simple ou double effet (25, 54).

7. Machine agricole de récolte selon une ou plusieurs des revendications précédentes, **caractérisée en ce que** le dispositif d'inversion de marche (32) est couplé par l'intermédiaire d'une unité de commande (31) au moyen de déplacement au nombre d'au moins un (26, 53), de façon qu'un signal d'entrée X1 présent au niveau de l'unité de commande (31) déclenche automatiquement un premier signal de sortie Y1 pour actionner le moyen de déplacement au nombre d'au moins un (26, 53) et, avec un décalage dans le temps par rapport à celui-ci, un second signal de sortie Y2 pour actionner le dispositif d'inversion de marche (32).

8. Machine agricole de récolte selon la revendication 7, **caractérisée en ce que** l'actionnement du moyen de déplacement au nombre d'au moins un (26, 53) par le signal de sortie Y1 provoque un déplacement de l'outil frontal (10) dans la position de non-travail au nombre d'au moins une.

9. Machine agricole de récolte selon une ou plusieurs des revendications précédentes, **caractérisée en ce que** le moyen de déplacement (26) est conformé en vérin à simple effet (25), et le retour de l'outil frontal (10) de la position de non-travail, au nombre d'au moins une, à la position de travail s'effectue sous l'action de la gravité.

10. Machine agricole de récolte selon la revendication 9, **caractérisée en ce que**, dans la position de travail, l'outil frontal (10) comporte un moyen mécanique et/ou hydraulique de verrouillage en position extrême (58, 59) connu en soi.

11. Machine agricole de récolte selon une ou plusieurs des revendications 1 à 8, **caractérisée en ce que** le moyen de déplacement au nombre d'au moins un (53) est conformé en vérin à double effet (54), et le retour de l'outil frontal (10) de la position de non-travail, au nombre d'au moins une, à la position de travail s'effectue par une mise en pression du moyen de déplacement (53) et, en position de travail, l'outil frontal (10) est immobilisé par la persistance de la mise en pression du moyen de déplacement au nombre d'au moins un (53).

12. Machine agricole de récolte selon une ou plusieurs des revendications précédentes, **caractérisée en ce que** le moyen d'entraînement (60) de l'outil frontal (10) est arrêté lors du déplacement dans la position de non-travail au nombre d'au moins une.

13. Machine agricole de récolte selon la revendication 12, **caractérisée en ce que** le moyen d'entraînement (60) de l'outil frontal (10) est en liaison active avec l'outil frontal (10) par l'intermédiaire d'un système d'accouplement rapide (61) connu en soi.

14. Machine agricole de récolte selon une ou plusieurs des revendications 1 à 11, **caractérisée en ce que** le moyen d'entraînement (60) de l'outil frontal (10) n'est pas arrêté lors du déplacement dans la position de non-travail au nombre d'au moins une.

15. Machine agricole de récolte selon la revendication 14, **caractérisée en ce que** le moyen d'entraînement (60) de l'outil frontal (10) est en liaison active avec l'outil frontal (10) par l'intermédiaire d'un arbre articulé télescopique (64) connu en soi.

16. Machine agricole de récolte selon une ou plusieurs des revendications précédentes, **caractérisée en ce qu'**un déflecteur de produit récolté (49) est associé à l'outil frontal (10) dans la zone arrière de celui-ci.

17. Machine agricole de récolte selon la revendication 16, **caractérisée en ce que** le déflecteur de produit récolté (49) est formé par une tôle coudée (50) disposée de manière détachable sur l'outil frontal (10).
